## Europäisches Patentamt
## European Patent Office
## Office européen des brevets

(19)

(11) Veröffentlichungsnummer : **0 305 724 B1**

(12) **EUROPÄISCHE PATENTSCHRIFT**

(45) Veröffentlichungstag der Patentschrift :
**19.06.91 Patentblatt 91/25**

(51) Int. Cl.⁵ : **B25B 1/14**

(21) Anmeldenummer : **88111900.2**

(22) Anmeldetag : **23.07.88**

(54) **Spannvorrichtung mit mechanischem Kraftverstärker.**

(30) Priorität : **01.09.87 DE 3729093**

(43) Veröffentlichungstag der Anmeldung :
**08.03.89 Patentblatt 89/10**

(45) Bekanntmachung des Hinweises auf die
Patenterteilung :
**19.06.91 Patentblatt 91/25**

(84) Benannte Vertragsstaaten :
**AT BE CH FR GB IT LI NL SE**

(56) Entgegenhaltungen :
**AT-B- 370 025**

(56) Entgegenhaltungen :
**AU-B- 472 697**
**CH-A- 573 560**
**DE-B- 1 283 168**
**US-A- 4 444 379**

(73) Patentinhaber : **Gressel AG**
**CH-8355 Aadorf (CH)**

(72) Erfinder : **Ruegg, Walter**
**Frauenackerstrasse 4**
**CH-8356 Ettenhausen (CH)**

(74) Vertreter : **Liebau, Gerhard, Dipl.-Ing.**
**Birkenstrasse 39 Postfach 22 02 29**
**W-8900 Augsburg 22 (DE)**

## Beschreibung

Die Erfindung betrifft eine Spannvorrichtung mit mechanischem Kraftverstärker, mit einer insbesondere auf einen beweglichen Spannschieber eines Maschinenschraubstockes oder dgl. einwirkenden, axial beweglichen Druckstange, mit einer den Kraftverstärker umschließenden, koaxial zur Druckstange angeordneten Spannhülse, welche mit einem Außengewinde in ein Muttergewinde eines stationären Gehäuses eingreift, mit einem in der Spannhülse axial verschiebbaren und drehfest mit dieser verbundenen Spannglied, dessen eines Ende sich an der Druckstange abstützt, mit einem in der Spannhülse begrenzt drehbar angeordneten und axial abgestützten Widerlager, welches mit einem aus der Spannhülse herausgeführten Betätigungshebel verbunden ist, mit mehreren zwischen dem Spannglied und dem Widerlager angeordneten Spannbolzen, die in einer Endlage (Öffnungsstellung) des Widerlagers in spitzem Winkel zur Spannhülsenachse geneigt und in der anderen Endlage (Spannstellung) des Widerlagers annähernd parallel zur Spannhülsenachse angeordnet sind, mit einer Druckfeder, die auf das eine Ende des Spanngliedes einwirkt und dieses gegen die Spannbolzen drückt, und mit einer am widerlagerseitigen Ende der Spannhülse angeordneten Stellhülse.

Bei einer derartigen bekannten Spannvorrichtung (DE-AS 1 283 168) ist das eine Ende der Spannhülse mit einer Hohlspindel versehen, die ihrerseits in das Muttergewinde des Schraubstockgehäuses eingreift. Die Hohlspindel hat einen Durchmesser, der kleiner ist als der Außendurchmesser der Spannhülse. Die Spannhülse und die Hohlspindel sind gegenüber dem Gehäuse um mehr als 180° mittels einer Handkurbel drehbar, die am Widerlager angreift. Die Hohlspindel stützt sich mit ihrem freien Ende an einem Ende des Spannschiebers eines Maschinenschraubstockes ab. Dieser Spannschieber weist an seinem anderen Ende eine Mit nehmerplatte auf, welche mit einer entsprechenden Öffnung in eine Ringnut der Hohlspindel eingreift. Damit die Druckstange ihren Spannhub ausführen kann, muß zwischen der Mitnehmerplatte und der Ringnut ausreichend axiales Spiel vorhanden sein. Diese bekannte Spannvorrichtung hat verschiedene Nachteile. Sie weist eine verhältnismäßig große axiale Baulänge auf, was dadurch bedingt ist, daß die Hohlspindel im Anschluß an die Spannhülse vorgesehen ist und daß außerdem zwischen der Spannhülse und dem Gewinde der Hohlspindel Platz für die Ringnut und die Mitnehmerplatte vorhanden sein muß. Da der Durchmesser der Hohlspindel kleiner ist als der der Lagerhülse, weist sie bei Verwendung eines üblichen selbsthemmenden Gewindes nur eine verhältnismäßig kleine Steigung auf. Dies ist insbesondere beim Schnellspannen von Werkstücken von Nachteil. Beim Schnellspannen von Werkstücken werden nacheinander in einem Maschinenschraubstock oder einer sonstigen Vorrichtung mehrere Werkstücke gleicher Größe gespannt. Hierzu ist es erforderlich, die bewegliche Spannbacke etwa 2-4 mm vom Werkstück zu entfernen, damit das Werkstück bequem in den Schraubstock bzw. die Spannvorrichtung eingelegt werden kann. Um den gewünschten Zustell- bzw. Öffnungshub von 4 mm zu erreichen, ist mindestens eine halbe Umdrehung der Handkurbel erforderlich. Hinzu kommt jedoch noch ein weiterer Drehwinkel der Handkurbel, der nach Anlage des Spannschiebers am Werkstück erforderlich ist, um das Widerlager gegenüber dem Spannglied zu verdrehen, um dabei die Spannbolzen aus ihrer gegenüber der Spannhülsenachse schrägen Lage in eine annähernd parallele Lage oder noch etwas über die Totpunktlage hinaus zu bewegen. Hierbei macht sich auch noch das zwischen Ringnut und Mitnehmerplatte erforderliche Spiel nachteilig bemerkbar. Die Hohlspindel muß nämlich bei jedem Zustellhub durch Verdrehen so weit von der Mitnehmerplatte entfernt werden, daß ausreichend Spiel zwischen Mitnehmerplatte und Ringnut vorhanden ist und die Bewegung des Spannschiebers beim Spannhub nicht behindert wird. Zur Ausführung des Zustellhubes und des Spannhubes, sowie umgekehrt, zum Öffnen der Spannvorrichtung, ist fast eine ganze Umdrehung der Handkurbel erforderlich. Beim Schnellspannen von Werkstücken sollte jedoch der Drehwinkel des Betätigungshebels möglichst klein sein und keinesfalls 180° überschreiten. Ein weiterer Nachteil der bekannten Spannvorrichtung besteht darin, daß der Spanndruck nicht exakt einstellbar ist. Zum Einstellen des Spanndruckes ist zwar am widerlagerseitigen Ende der Spannhülse eine Stellhülse vorgesehen, die eine Anschlagfläche für einen mit dem Widerlager verbundenen Anschlagstift aufweist. Eine weitere Anschlagfläche ist an der Lagerhülse vorgesehen. Die Stellhülse ist mittels einer Kerbverzahnung in verschiedenen Drehstellungen gegenüber der Spannhülse verrastbar, so daß sich der gegenseitige Abstand der beiden Anschlagflächen und damit auch der maximale Drehwinkel des Widerlagers einstellen läßt. Durch Begrenzung des Drehwinkels kann die Spannkraft aber nur sehr grob eingestellt werden. Gibt das Werkstück nach Beendigung des Spannhubes etwas nach, dann sinkt sofort die Spannkraft und das Werkstück wird nicht mehr ausreichend gehalten. Neben diesen Nachteilen hat die bekannte Spannvorrichtung den weiteren Nachteil, daß sich die Lagerhülse um mehr als 360° drehen kann. Der Winkelbereich, innerhalb welchem die Handkurbel zur Ausführung des Zustell- und Spannhubes bewegt werden muß, kann infolgedessen immer wieder in einem anderen Bereich, bezogen auf eine volle Umdrehung der Handkurbel, liegen.

Der Erfindung liegt deshalb die Aufgabe zugrunde, ausgehend von einer Spannvorrichtung der eingangs erwähnten Art, eine Schnellspannvorrichtung zu schaffen, die zur Schnellspannung von Werkstücken und dgl. geeignet ist und dabei eine kurze axiale Baulänge aufweist, zur Ausführung des Zustell- und Spannhubes bzw. des Öffnungshubes nur einen kleinen Drehwinkel des Betätigungshebels innerhalb eines vorbestimmten Winkelbereiches erfordert und bei der der Spanndruck einfach und genau einstellbar ist und auch bei einem eventuellen Nachgeben des Werkstückes erhalten bleibt.

Dies wird nach der Erfindung dadurch erreicht,

a) daß das Außengewinde direkt am Außenumfang der Spannhülse konzentrisch zum Bereich des Spanngliedes und der Spannbolzen vorgesehen ist,

b) daß die Druckfeder einerseits am Gehäuse und andererseits an der Druckstange abgestützt ist und über diese auf das Spannglied einwirkt,

c) daß die Stellhülse mittels eines Feingewindes gegenüber der Spannhülse axial verstellbar ist und zwischen der den Spannbolzen abgekehrten Seite des Widerlagers und der Stellhülse mehrere Tellerfedern angeordnet sind und

d) daß die Drehbewegung der Spannhülse gegenüber dem Gehäuse in Öffnungsrichtung durch Anschlagsflächen begrenzt ist.

Die Anordnung des Außengewindes am Außenumfang der Spannhülse hat zwei wichtige Funktionen. Zum einen wird hierdurch die axiale Baulänge der Spannvorrichtung verkürzt und ihr Aufbau vereinfacht. Zum andern weist das Außengewinde einen verhältnismäßig großen Durchmesser auf, so daß das Außengewinde eine verhältnismäßig große Steigung aufweisen kann und trotzdem noch Selbsthemmung gewährleistet ist. Die große Steigung hat den Vorteil, daß mit einem verhältnismäßig kleinen Drehwinkel der gewünschte Öffnungshub von 2-4 mm erreicht wird. Man kann beispielsweise mit einem Gesamtdrehwinkel des Betätigungshebels von 120°, der auch die für die Ausführung des Spannhubes erforderliche Winkelbewegung einschließt, einen Zustell- bzw. Öffnungshub von über 3 mm erreichen. Da die Druckfeder sich an der Druckstange abstützt, hat sie ebenfalls zwei Funktionen. Sie drückt nämlich die Druckstange beim Öffnungshub in ihre Öffnungsstellung. Der Spannschieber kann deshalb fest mit der Druckstange verbunden sein und es ist nicht erforderlich, axiales Spiel vorzusehen. Auch hierdurch wird der Drehwinkel des Betätigungshebels verkleinert. Mittels der gegenüber der Spannhülse axial verstellbaren Stellhülse kann die Vorspannung der Tellerfedern in einfacher Weise verändert und damit der Spanndruck genau nach einer Skala eingestellt werden. Die elastische Abstützung des Widerlagers an den Tellerfedern hat darüber hinaus den Vorteil, daß bei einem eventuellen Nachgeben des Werkstückes der Spanndruck erhalten bleibt.

Weitere vorteilhafte Ausgestaltungen der Erfindung sind in den Unteransprüchen gekennzeichnet.

Die Erfindung ist in folgendem, anhand eines in der Zeichnun dargestellten Ausführungsbeispieles, näher erläutert. Es zeigen :

Figur 1 einen Axial-Teilschnitt nach der Linie I-I der Figure 2,

Figur 2 einen Radialschnitt nach der Linie II-II der Figur 1,

Figur 3 einen Radialschnitt nach der Linie III-III der Figur 1.

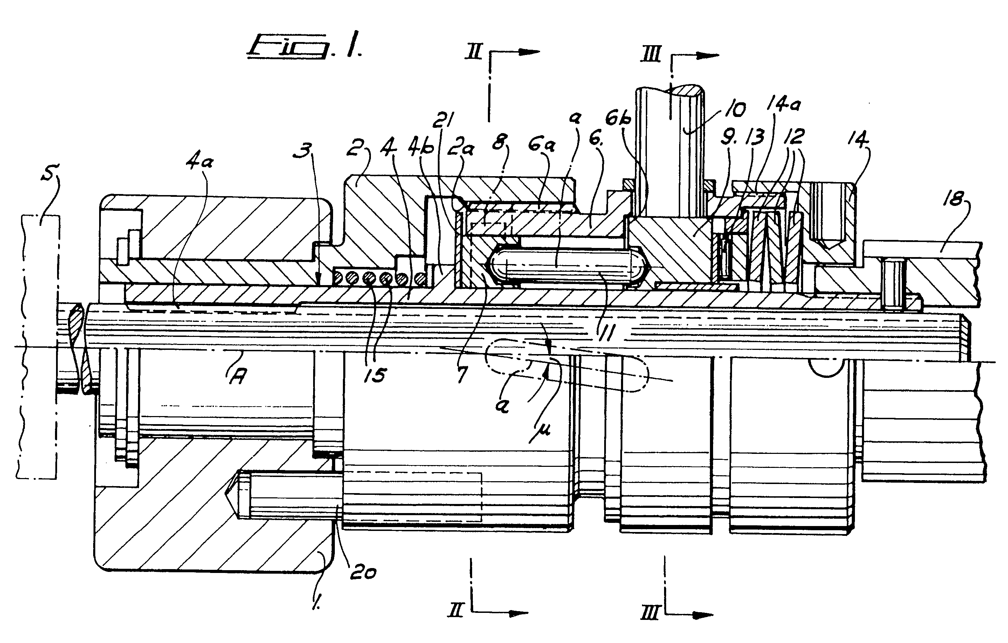

Mit dem stationären Teil 1 eines Maschinenschraubstockes, einer Lehre, oder einer sonstigen Einspannvorrichtung, ist das Gehäuse 2 drehfest und axial unverschiebbar, d.h. starr, verbunden. Anstelle der in der Zeichnung, Figur 1, dargestellten Verbindung kann auch jede andere starre Verbindung vorgesehen sein, beispielsweise kann das Gehäuse 2 in das stationäre Teil 1 eingeschraubt sein, oder mit diesem aus einem Stück bestehen. In dem Gehäuse 2 ist die Druckstange 3 axial verschiebbar gelagert. Diese Druckstange 3 besteht bei dem gezeigten Ausführungsbeispiel der Spannvorrichtung, welche für einen Maschinenschraubstock bestimmt ist, aus einer Hohlspindel 4 und einer innerhalb der Hohlspindel angeordneten Gewindestange 5. Die Hohlspindel 4 ist in dem Gehäuse 2 drehbar gelagert und greift mit einem Gewinde 4a in das Gewinde der Gewindestange 5 ein. Mit ihrem über die Hohlspindel 4 vorstehenden, freien, linken Ende ist die Gewindestange 5 fest mit dem strichpunktiert dargestellten Schieber S des Maschinenschraubstockes verbunden. Das andere Ende der Hohlspindel 4 ist mit einem Betätigungsgriff 18 verbunden.

Sofern die erfindungsgemäße Spannvorrichtung in einer Einspannvorrichtung, beispielsweise einer Lehre, mit vorbestimmter Spannweite verwendet werden soll, kann die Druckstange 3 einteilig ausgebildet sein. Ihr nach links über das Gehäuse 2 vorstehendes freies Ende wäre dann direkt mit dem Schieber der Einspannvorrichtung verbunden.

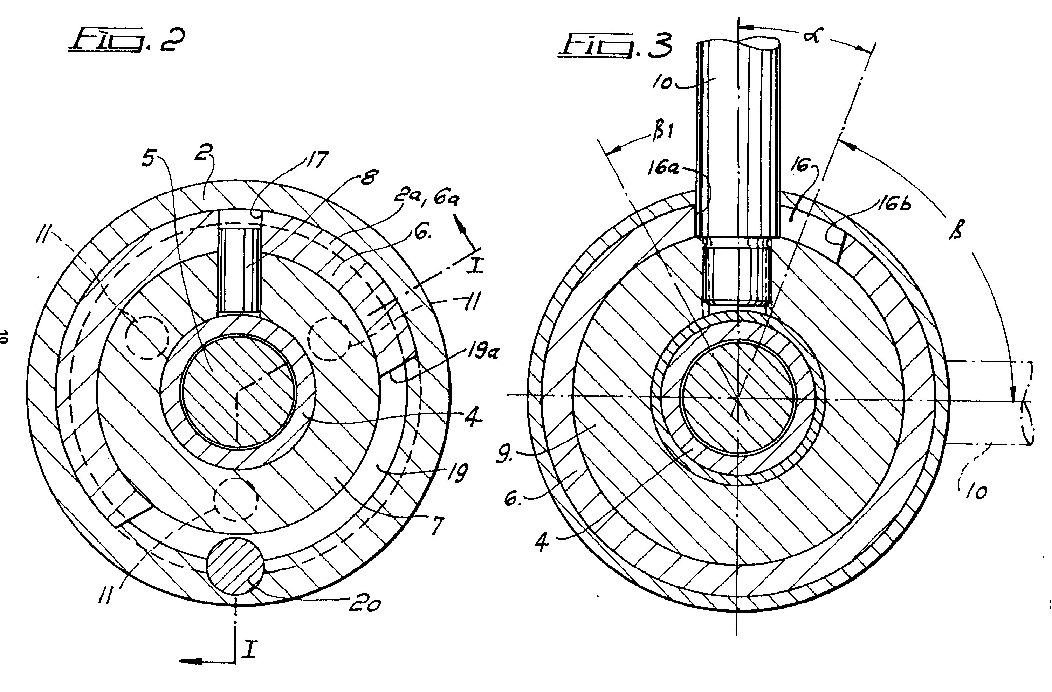

Konzentrisch zur Druckstange 3 ist eine Spannhülse 6 angeordnet. Die Spannhülse 6 umschließt einen Kraftverstärker. Dieser weist ein Spannglied 7, ein Widerlager 9 und zwischen beiden Teilen angeordnete Spannbolzen 11 auf. Das Spannglied 7 und das Widerlager 9 sind als Ringe ausgebildet und auf der Druckstange 3 – beim gezeigten Ausführungsbeispiel auf deren Hohlspindel 4 – drehbar gelagert. In dem Spannglied 7 ist ein radialer Mitnehmerbolzen 8 befestigt, der, wie es aus Figur 2 ersichtlich ist, in einen axialen Längsschlitz 17 der Spannhülse 6 eingreift. Der Längsschlitz 17 hat eine Länge, die größer ist als der Durchmesser des Mitnehmerbolzens 8, so daß die Spannhülse 6 und das Spannglied 7 über den Mitnehmerbolzen 8 und den Längsschlitz 17 axial zueinander verschiebbar, jedoch drehfest verbunden sind. In das Widerlager 9 ist ein radial angeordneter Betätigungshebel 10 eingeschraubt, der durch ein sich in Umfangsrichtung erstreckendes Langloch 16 der Spannhülse hindurchragt. Die beiden Enden 16a und 16b des Langloches 16 bilden Anschläge für den Betätigungshebel, wodurch, wie aus Figur 3 ersichtlich ist, der Drehwinkel α des Betätigungshebels 10 und damit auch des Widerlagers 9 gegenüber der Spannhülse 6 begrenzt wird. Das Widerlager 9 ist in der Spannhülse 6 axial verschiebbar. Zwischen dem Widerlager 9 und dem Spannglied 7 sind insgesamt drei um jeweils 120° in Umfangsrichtung zueinander versetzte Spannbolzen 11 vorgesehen. Die Spannbolzen 11 nehmen in einer Endlage des Widerlagers 9, die der entspannten Öffnungsstellung der Spannvorrichtung entspricht, gegenüber der Achse A der Spannhülse 6 einen spitzen Winkel μ von beispielsweise 10° ein, wie es in Figur 1 mit strichpunktierten Linien angedeutet ist. In der einen Endlage des Widerlagers 9 liegt der Betätigungshebel 16 an dem Anschlag 16b an. Die andere Endlage des Widerlagerringes 9 wird durch den Anschlag 16a bestimmt, an welchem der Betätigungshebel 10 in Spannstellung der Spannvorrichtung anliegt. Beim Verschwenken des Spannhebels 10 aus der Öffnungsstellung in die Spannstellung werden die in das Widerlager 9 eingreifenden Enden der Spannbolzen 11 mitgenommen, so daß sich der Winkel μ zwischen den Spannbolzenachsen a und der Spannhülsenachse A verkleinert und kurz vor Erreichen der Spannstellung 0° wird. Der Anschlag 16a ist so bemessen, daß die Spannbolzen in Spannstellung des Widerlagers stets geringfügig über ihre parallele Lage zur Spannhülsenachse, d.h. über ihre Totpunktlage hinaus, bewegt sind, wodurch eine sichere Verriegelung der Spanneinrichtung erreicht wird.

Die Spannhülse 6 ist im Bereich des Spanngliedes 7 und der Spannbolzen 11 an ihrem Außenumfang mit einem Außengewinde 6a versehen. Dieses Außengewinde ist zweckmäßig als Grobgewinde (Stahlgewinde) ausgebildet. Beim gezeigten Ausführungsbeispiel ist das Außengewinde 6a ein Trapezgewinde Tr 52 × 12, d.h. es hat eine Steigung oder Ganghöhe von 12 mm. Übliche Trapezgewinde gemäß DIN 103 haben in der Vorzugsreihe hingegen bei einem Durchmesser von 52 mm nur eine Steigung von 8 mm. Da die Steigung des Außengewindes 6a wesentlich ist für den mit einem vorbestimmten Drehwinkel des Betätigungshebels 10 erreichbaren Zustell- bzw. Öffnungshub, und da das Außengewinde 6a stets Selbsthemmung aufweisen muß, läßt sich die Steigung nicht beliebig erhöhen. Aus diesem Grund ist es vorteilhaft, wenn das Außengwinde einen Nenndurchmesser von mindestens 44 mm bei einer Steigung von mindestens 10 mm aufweist.

Das Außengewinde 6a der Spannhülse 6 greift in ein entsprechendes Muttergewinde 2a des Gehäuses 2 ein.

Am widerlagerseitigen Ende der Spannhülse 6 ist die Stellhülse 14 angeordnet, die mittels eines Feingewindes 14a gegenüber der Spannhülse 6 axial verstellbar ist. Zwischen der den Spannbolzen 11 abgekehrten Seite des Widerlagers 9 und der Stellhülse 14 sind mehrere Tellerfedern 12 angeordnet, wobei zur Verminderung der Reibung zwischen den Tellerfedern 12 und dem Widerlager 9 ein Nadellager 13 vorgesehen ist. Durch Verdrehung der Stellhülse 14 gegenüber der Spannhülse 6 läßt sich die Kraft des Tellerfederpaketes zwischen 1 kN und 10 kN und damit die mit der Spannvorrichtung erreichbare Spannkraft einstellen.

Zwichen dem Gehäuse 2 und einem an der Druckstange 3 bzw. deren Hohlspindel 4 vorgesehenen Bund 4b ist eine Druckfeder 15 vorgesehen. Diese Druckfeder 15 drückt die Druckstange 3 bzw. Hohlspindel 4 nach rechts in Öffnungsstellung und sorgt außerdem dafür, daß die Spannbolzen 11 während des Zustellhubes in ihrer gegenüber der Spannhülsenachse A schrägen Stellung verbleiben.

Damit der Betätigungshebel 10 beim Spannen und Öffnen der Spannvorrichtung sich immer innerhalb eines vorbestimmten Winkelbereiches bewegt, was für eine Schnellspannvorrichtung von wesentlicher Bedeutung ist, ist die Drehbewegung der Spannhülse 6 gegenüber dem Gehäuse 2 in Öffnungsrichtung durch Anschlagflächen begrenzt. Diese Anschlagflächen sind beim gezeigten Ausführungsbeispiel dadurch gebildet, daß die Spannhülse 6 an ihrem vorderen Ende eine Aussparung 19 aufweist, die sich über einen Teil ihres Umfanges erstreckt. Das eine Ende 19a dieser Aussparung 19 bildet eine erste Anschlagfläche. Die Gegen-Anschlagfläche wird durch den Haltestift 20 gebildet, der beim gezeigten Ausführungsbeispiel gleichzeitig als Verdrehsicherung zwischen dem stationären Teil 1 und dem Gehäuse 2 dient.

Die Wirkungsweise ist folgende :

Zur Grobeinstellung der Spannweite des Maschinenschraubstockes wird die Hohlspindel 4 mittels des Betätigungsgriffes 18 gedreht. Durch ihr Innengewinde 4a wird die Gewindestange und damit der Schieber S verschoben. Die Spannweite des Maschinenschraubstockes läßt sich stufenlos einstellen. In der Praxis wird die Spannweite ca. 2 mm größer als die zu spannende Abmessung des Werkstückes eingestellt, damit dieses ungehindert in dem Maschinenschraubstock eingelegt werden kann.

Das Ein- und Ausspannen (Schnellspannen) des Werkstückes erfolgt mittels des Betätigungshebels 10. In Öffnungsstellung der Spannvorrichtung bzw. des Maschinenschraubstockes ist die Spannhülse gegenüber der in Figur 2 dargestellten Lage so weit nach rechts verdreht, daß die Anschlagfläche 19a an dem Haltestift 20 anliegt. Außerdem ist entgegen der Figur 3 der Widerlagerring 9 so weit nach rechts verschwenkt, daß der Betätigungshebel 10 an dem Anschlag 16b anliegt. Der Betätigungshebel 10 nimmt dann in Öffnungsstellung die in Figur 3 dargestellte strichpunktierte Lage ein. Durch Schwenken des Betätigungshebels 10 gemäß Figur 3 nach links entgegen dem Uhrzeigersinn, wird das Widerlager gedreht. Unter Wirkung der Druckfeder 15, deren Druck ausreicht, um die Spannbolzen 11 in ihrer gegenüber der Spannhülsenachse A schrägen Lage zu halten, wird bei dieser anfänglichen Drehung des Widerlagers 9 auch das Spannglied 7 in der gleichen Drehrichtung mitgenommen. Da das Spannglied 7 über den Mitnahmebolzen 8 drehfest mit der Spannhülse 6 verbunden ist, und da außerdem auch das Widerlager 9 an die Stützfläche 6b unter Wirkung der Tellerfedern 12 angepreßt wird, wird bei Drehung des Widerlagers 9 zunächst auch die Spannhülse 6 in der gleichen Drehrichtung gedreht. Durch das Zusammenwirken des Außengewindes 6a mit dem Muttergewinde 2a bewegt sich die Spannhülse 6 gemäß Figur 1 nach links. Durch das über die Zwischenscheibe 21 am Bund 4b anliegende Spannglied 7, wird die Druckstange 3 nach links so weit verschoben, bis der Schieber am Werkstück anliegt. Den Weg, den dabei der Schieber S von seiner Öffnungsstellung bis zur Anlage am Werkstück zurücklegt, bezeichnet man als Zustellhub. Beträgt dieser Zustellhub beispielsweise 2 mm, so muß hierfür gemäß Figur 3 der Betätigungshebel 10 um einen Winkel $\beta$ von 60° verschwenkt werden.

Sobald der Schieber S am Werkstück anliegt, steigt das Drehmoment an und eine weitere Drehung der Spannhülse 6 wird durch die Gewinde 2a, 6a blockiert. Durch den Mitnehmerbolzen 8 wird hiermit auch eine weitere Drehung des Spanngliedes 7 verhindert. Es erfolgt jetzt der eigentliche Spannhub. Bei Weiterdrehung des Widerlagers nach links werden die Spannbolzen 11 aufgerichtet, d.h. der Winkel $\mu$ gegenüber der Spannhülsenachse A nimmt ab. Durch dieses Aufrichten der Spannbolzen 11 vergrößert sich der Abstand zwischen Spannglied 7 und Widerlager 9. Die Drehung des Widerlagers 9 wird so weit fortgesetzt, bis die Achsen a der Spannbolzen 11 über ihre parallel zur Spannhülsenachse A verlaufende Totpunktlage hinaus um etwa 3° entgegengesetzt zu ihrer Ausgangsstellung gegenüber der Spannhülsenachse A geneigt sind. In dieser Spannstellung liegt dann der Betätigungshebel 10, wie es in Figur 3 dargestellt ist, an dem Anschlag 16a der Spannhülse 6 an. Hiermit ist eine stabile Spannstellung erreicht. Durch die Vergrößerung des Abstandes zwischen Spannglied 10 und Widerlager 9 während des Spannhubes um etwa 0,44 mm, wird das Widerlager etwas nach rechts verschoben und hebt sich hierbei von der Stützfläche 6b der Spannhülse 6 ab. Die mittels der Stellhülse 14 voreingestellte Spannkraft der Tellerfedern 12 wird dann über das Nadellager 13, das Widerlager 9, die Spannbolzen 11, das Spannglied 7 und den Bund 4b auf die Druckstange 3 und damit auf den Schieber übertragen. Sie drücken den Schieber S mit der voreingestellten Spannkraft an das Werkstück an. Bei einem eventuellen Nachgeben des Werkstückes bleibt die Spannkraft dank der Elastizität der Tellerfedern 12 erhalten, wenngleich sie etwas absinkt.

Das Entspannen erfolgt in umgekehrter Reihenfolge, indem der Betätigungshebel 10 gemäß Figur 3 in entgegengesetzter Drehrichtung nach rechts verschwenkt wird. Er kommt hierbei an dem Anschlag 16b zur Anlage, wodurch sichergestellt ist, daß die Spannbolzen 11 nicht über die vorgesehene Schrägstellung von 10° gegenüber der Spannhülsenachse gekippt werden. Die Druckfeder 15 hält das Spannglied 7 in ständiger Anlage an den Spannbolzen 11 und bewirkt außerdem, daß die Druckstange 3 nach rechts in Öffnungsstellung bewegt wird. Sobald der Betätigungshebel 10 an dem Anschlag 16b anliegt, wird die Spannhülse 6 gemäß Figur 2 und 3 im Uhrzeigersinn gedreht, solange bis ihre Anschlagfläche 19a an dem Haltestift 20 anliegt. Damit nimmt der Betätigungshebel 10 wieder seine in Figur 3 strichpunktiert dargestellte Lage ein. Durch Verdrehung der Spannhülse 6 gegenüber dem Gehäuse 2 bewegt sich die Spannhülse gemäß Figur 1 nach rechts und die Druckstange 3 kann unter Wirkung der Druckfeder 15 folgen. Über die Gewindestange 5 wird hiermit auch der Schieber S in die Öffnungsstellung bewegt.

Beim Schnellspannen von Werkstücken sollte der Drehwinkel des Betätigungshebels 10 kleiner sein als 180°, vorzugsweise kleiner als 150°. Dies ist bei der erfindungsgemäßen Spannvorrichtung gewährleistet. Durch einen Drehwinkel $\beta1$ von 120° läßt sich nämlich ein Zustellhub von 4 mm erreichen. An diesen Drehwinkel $\beta1$ schließt sich dann noch der Winkel $\alpha$ von 22° an, der zur Ausführung des Spannhubes erforderlich ist.

## Ansprüche

1. Spannvorrichtung mit mechanischem Kraftverstärker, mit einer insbesondere auf einem beweglichen Spannschieber eines Maschinenschraubstockes oder dgl. einwirkenden, axial beweglichen Druckstange (3), mit einer den Kraftverstärker umschließenden, koaxial zur Druckstange angeordneten Spannhülse (6), welche mit einem Außengewinde in ein Muttergewinde (6a) eines stationären Gehäuses (2) eingreift, mit einem in der Spannhülse axial verschiebbaren und drehfest mit dieser verbundenen Spannglied (7), dessen eines Ende sich an der Druckstange abstützt, mit einem in der Spannhülse begrenzt drehbar angeordneten und axial abgestützen Widerlager (9), welches mit einem aus der Spannhülse (6) herausgeführten Betätigungshebel (10) verbunden ist, mit mehreren zwischen dem Spannglied und dem Widerlager angeordneten Spannbolzen (11), die in einer Endlage (Öffnungsstellung) des Widerlagers in spitzem Winkel zur Spannhülsenachse geneigt und in der anderen Endlage (Spannstellung) des Widerlagers annähernd parallel zur Spannhülsenachse angeordnet sind, mit einer Druckfeder (15), die auf das eine Ende des Spanngliedes einwirkt und dieses gegen die Spannbolzen drückt, und mit einer am widerlagerseitigen Ende der Spannhülse angeordneten Stellhülse (14), **dadurch gekennzeichnet,**

a) daß das Außengewinde (6a) direkt am Außenumfang der Spannhülse (6) konzentrisch zum Bereich des Spanngliedes (7) und der Spannbolzen (11) vorgesehen ist,

b) daß die Druckfeder (15) einerseits am Gehäuse (2) und andererseits an der Druckstange (3, 4) abgestützt ist und über diese auf das Spannglied (7) einwirkt,

c) daß die Stellhülse (14) mittels eines Feingewindes (14a) gegenüber der Spannhülse (6) axial verstellbar ist und zwischen der den Spannbolzen (11) abgekehrten Seite des Widerlagers (9) und der Stellhülse (14) mehrere Tellerfedern (12) angeordnet sind und

d) daß die Drehbewegung der Spannhülse (6) gegenüber dem Gehäuse (1) in Öffnungsrichtung durch Anschlagsflächen (19a, 20) begrenzt ist.

2. Spannvorrichtung nach Anspruch 1, **dadurch gekennzeichnet,** daß das Außengewinde (6a) an der Spannhülse (6) ein Grobgewinde ist.

3. Spannvorrichtung nach Anspruch 2, **dadurch gekennzeichnet,** daß das Außengewinde (6a) einen Nenndurchmesser von mindestens 44 mm bei einer Steigung (Ganghöhe) von mindestens 10 mm aufweist.

4. Spannvorrichtung nach Anspruch 3, **dadurch gekennzeichnet,** daß das Außengewinde (6a) ein Trapezgewinde Tr 52 × 12 (mm) ist.

5. Spannvorrichtung nach Anspruch 1, **dadurch gekennzeichnet,** daß der Drehwinkel (α) des Widerlagers (9) gegenüber der Spannhülse (6) durch Anschläge (16a, 16b) so begrenzt ist, daß die Spannbolzen (11) in Spannstellung des Widerlagers (9) stets geringfügig über ihre parallele Lage (Totpunktlage) zur Spannhülsenachse (A) hinaus bewegt sind.

6. Spannvorrichtung nach Anspruch 5, **dadurch gekennzeichnet,** daß der Drehwinkel (α) des Widerlagers (9) gegenüber der Spannhülse (6) kleiner ist als 25°.

7. Spannvorrichtung nach mindestens einem der Ansprüche 1-6, **dadurch gekennzeichnet,** daß der maximale Drehwinkel (β1) des Betätigungshebels (10) gegenüber dem Gehäuse (2) kleiner ist als etwa 150°.

8. Spannvorrichtung nach mindestens einem der Ansprüche 1-7, **dadurch gekennzeichnet,** daß das Spannglied (7) und das Widerlager (9) als Ringe ausgebildet sind und die Druckstange (3, 4) durch beide Ringe hindurchgeführt ist.

9. Spannvorrichtung nach Anspruch 8, **dadurch gekennzeichnet,** daß die Druckstange (3, 4) einen Bund (4b) aufweist, an dessen einen Seite sich das Spannglied (7) und an dessen anderen Seite sich die Druckfeder (15) abstützt.

10. Spannvorrichtung nach Anspruch 8 oder 9, **dadurch gekennzeichnet,** daß die Druckstange (3) als Hohlspindel (4) ausgebildet und in dem Gehäuse (1), dem Spannglied (7) und dem Widerlager (9) um ihre Achse (A) drehbar ist, und daß innerhalb der Hohlspindel (4) eine drehfeste Gewindestange (5) angeordnet ist, die sich mit ihrem über die Hohlspindel (4) vorstehenden, freien Ende an dem Schieber (S) eines Maschinenschraubstockes oder dgl. abstützt und in deren Gewinde ein an der Hohlspindel (4) vorgesehenes Innengewinde (4a) eingreift.

11. Spannvorrichtung nach Anspruch 10, **dadurch gekennzeichnet,** daß die Hohlspindel (4) aus dem widerlagerseitigen Ende der Spannhülse (6) herausgeführt und dort mit einem Betätigungsgriff (18) versehen ist.

**Revendications**

1. Dispositif de serrage à amplification mécanique des forces, comprenant une tige de pression mobile axialement (3) qui agit en particulier sur une mâchoire mobile d'un étau de machine ou similaire, comprenant un manchon de serrage (6) qui entoure l'amplificateur de forces, qui est disposé de manière coaxiale par rapport à la tige de pression et qui est en prise par un filetage extérieur dans un filetage femelle (6a) d'un carter fixe (2), comprenant un organe de serrage (7) qui peut coulisser axialement dans le manchon de serrage, qui est relié à ce dernier de manière fixe en rotation et dont l'une des extrémités s'appuie sur la tige de pression, comprenant un contre-appui (9) qui est disposé dans le manchon de serrage en pouvant tourner de manière limitée, qui est appuyé axialement et qui est relié à un levier d'actionnement (1) sortant du manchon de serrage (6), comprenant plusieurs goupilles de serrage (11) qui sont disposées entre l'organe de serrage et le contre-appui, qui sont inclinées sous un angle aigu par rapport a l'axe du manchon de serrage dans une position finale (position d'ouverture) du contre-appui et qui sont disposées de manière approximativement parallèle à l'axe du manchon de serrage dans l'autre position finale (position de serrage) du contre-appui, comprenant un ressort de compression (15) qui agit sur l'une des extrémités de l'organe de serrage et qui pousse ce dernier contre les goupilles de serrage, et comprenant un manchon de réglage (14) disposé à l'extrémité du manchon de serrage qui est située du côté du contre-appui, caractérisé :

a) par le fait que le filetage extérieur (6a) est prévu directement sur le pourtour extérieur du manchon de serrage (6), de manière concentrique par rapport à la région de l'organe de serrage (7) et des goupilles de serrage (11),

b) par le fait que le ressort de compression (15) est appuyé d'un côté sur le carter (2) et de l'autre côté sur la tige de pression (3, 4), et qu'il agit par l'intermédiaire de ce dernier sur l'organe de serrage (7),

c) par le fait que le manchon de réglage (14) peut être déplacé axialement par rapport au manchon de serrage (6) au moyen d'un filetage à pas fin (14a), et que plusieurs rondelles-ressorts (12) sont disposées entre le côté du contre-appui (9) qui est opposé aux goupilles de serrage (11) et le manchon de réglage (14), et :

d) par le fait que le mouvement de rotation du manchon de serrage (6) par rapport au carter (1) est limité dans la direction de l'ouverture par des surfaces de butée (19a, 20).

2. Dispositif de serrage selon la revendication 1, caractérisé par le fait que le filetage extérieur (6a) ménagé sur le manchon de serrage (6) est un filetage à pas rapide.

3. Dispositif de serrage selon la revendication 2, caractérisé par le fait que le filetage extérieur (6a) présente un diamètre nominal d'au moins 44 mm pour un pas (distance entre filets) d'au moins 10 mm.

4. Dispositif de serrage selon la revendication 3, caractérisé par le fait que le filetage extérieur (6a) est un filetage trapézoidal Tr 52 × 12 (mm).

5. Dispositif de serrage selon la revendication 1, caractérisé par le fait que l'angle de rotation (α) du contre-appui (9) par rapport au manchon de serrage (6) est limité par des butées (16a, 16b) de telle manière que les goupilles de serrage (11), dans la position de serrage du contre-appui (9), soient toujours déplacées légèrement au-delà de leur position parallèle (position de point mort) par rapport à l'axe (A) du manchon de serrage.

6. Dispositif de serrage selon la revendication 5, caractérisé par le fait que l'angle de rotation (α) du contre-appui (9) par rapport au manchon de serrage (6) est inférieur à 25°.

7. Dispositif de serrage selon l'une au moins des revendications 1 à 6, caractérisé par le fait que l'angle de rotation maximal (β1) du levier d'actionnement (10) par rapport au carter (2) est inférieur à 150° environ.

8. Dispositif de serrage selon l'une au moins des revendications 1 à 7, caractérisé par le fait que l'organe de serrage (7) et le contre-appui (9) sont réalisés sous la forme de bagues, et que la tige de pression (3, 4) passe à travers ces deux bagues.

9. Dispositif de serrage selon la revendication 8, caracterisé par le fait que la tige de pression (3, 4) comporte un collet (4b) sur un côté duquel s'appuie l'organe de serrage (7) et sur l'autre côté duquel s'appuie le ressort de compression (15).

10. Dispositif de serrage selon la revendication 8 ou 9, caractérisé par le fait que la tige de pression (3) est réalisée sous la forme d'une broche creuse (4) et qu'elle peut tourner autour de son axe (A) dans le carter (1), l'organe de serrage (7) et le contre-appui (9), et par le fait qu'est disposée à l'intérieur de la broche creuse (4) une tige filetée fixe en rotation (5) qui s'appuie sur la mâchoire coulissante (S) d'un étau de machine ou similaire par son extrémité libre en saillie au-delà de la broche creuse (4) et dans le filetage de laquelle est en prise un filetage intérieur (4a) prévu sur la broche creuse (4).

11. Dispositif de serrage selon la revendication 10, caractérisé par le fait que la broche creuse (4) sort de l'extrémité du manchon de serrage (6) qui est située du côté du contre-appui, et qu'elle est munie à cet endroit d'une poignée d'actionnement (18).

## Claims

1. Clamping device with mechanical servo mechanism, with an axially movable plunger (3) acting in particular on a movable clamping slide of a machine vice or the like, with a clamping sleeve (6) which surrounds the servo mechanism, is arranged coaxially with the plunger and engages by an external thread in an internal thread (6a) of a stationary housing (2), with a clamping member (7) which is axially slidable in the clamping sleeve and nonrotatably connected thereto and one end of which is supported on the plunger, with an abutment (9) which is axially supported and rotatable to a limited extent in the clamping sleeve (6) and which is connected to an operating lever (10) projecting from the clamping sleeve, with several studs (11) which are disposed between the clamping member and the abutment and which in one end position (open position) of the abutment are inclined at an acute angle to the axis of the clamping sleeve and in the other end position (clamping position) of the abutment are arranged approximately parallel to the axis of the clamping sleeve, with a compression spring (15) which acts on one end of the clamping member and biases it towards the studs, and with an adjusting sleeve (14) disposed at the abutment end of the clamping sleeve, characterised in that

a) the external thread (6a) is provided directly on the outer circumference of the clamping sleeve (6), concentrically to the region of the clamping member (7) and the studs (11),

b) the compression spring (15) is supported at one end on the housing (2) and at the other end on the plunger (3, 4), and acts via the latter on the clamping member (7),

c) the adjusting sleeve (14) is axially displaceable relative to the clamping sleeve (6) by means of a fine thread (14a), and several cup springs (12) are disposed between the side of the abutment (9) facing away from the studs (11) and the adjusting sleeve (14), and

d) rotational movement of the clamping sleeve (6) relative to the housing (1) is limited by stop faces (19a, 20) in the direction of opening.

2. Clamping device according to claim 1, characterised in that the external thread (6a) on the clamping sleeve (6) la a coarse thread.

3. Clamping device according to claim 2, characterised in that the external thread (6a) has a nominal diameter of at least 44 mm for a pitch (lead) of at least 10 mm.

4. Clamping device according to claim 3, characterised in that the external thread (6a) is a trapezoid thread Tr 52 × 12 (mm).

5. Clamping device according to claim 1, characterised in that the angle of rotation (α) of the abutment (9) relative to the clamping sleeve (6) is limited by stops (16a, 16b) in such a way that the studs (11) in the clamping position of the abutment (9) are always moved slightly beyond their position parallel to the clamping sleeve axis (A) (dead centre position).

6. Clamping device according to claim 5, characterised in that the angle of rotation (α) of the abutment (9) relative to the clamping sleeve (6) is less than 25°.

7. Clamping device according to one or more of claims 1-6, characterised in that the maximum angle of rotation (β1) of the operating lever (10) relative to the housing (2) is less than approximately 150°.

8. Clamping device according to one or more of claims 1-7, characterised in that the clamping member (7) and the abutment (9) are designed as rings, and the plunger (3, 4) extends through both rings.

9. Clamping device according to claim 8, charcterised in that the plunger (3, 4) comprises a flange (4b) on one side of which is supported the clamping member (7), and on the other side the compression spring (15).

10. Clamping device according to claim 8 or 9, characterised in that the plunger (3) is designed as a hollow spindle (4) and is rotatable about its own axis (A) in the housing (1), the clamping member (7) and the abutment (9), and inside the hollow spindle (4) is disposed a non-rotatable threaded rod (5) which is supported by its free end projecting beyond the hollow spindle (4) on the slide (S) of a machine vice or the like and in whose thread engages an internal thread (4a) provided on the hollow spindle (4).

11. Clamping device according to claim 10, characterised in that the hollow spindle (4) extends out of the abutment end of the clamping sleeve (6), and is there provided with an operating handle (18).

FIG. 1.

EP 0 305 724 B1

FIG. 2

FIG. 3

EP 0 305 724 B1